# EUROPÄISCHE PATENTSCHRIFT

(11) **EP 3 601 837 B1**
(45) Veröffentlichungstag und Bekanntmachung des Hinweises auf die Patenterteilung: **09.04.2025**
(21) Anmeldenummer: 18789586.7
(22) Anmeldetag: 16.10.2018
(51) Int. Cl.: F16F 1/18

(54) **FEDERBLATT UND VERFAHREN ZUR HERSTELLUNG EINES FEDERBLATTES**
SPRING LEAF AND METHOD FOR PRODUCING A SPRING LEAF
LAME DE RESSORT ET PROCÉDÉ DE FABRICATION D'UNE LAME DE RESSORT

(30) Priorität: 16.10.2017 AT 508762017
(43) Veröffentlichungstag der Anmeldung: 05.02.2020
(73) Patentinhaber: Hendrickson Commercial Vehicle Systems Europe GmbH, 8750 Judenburg (AT)
(72) Erfinder: ZAMBERGER, Joerg, 8753 Fohnsdorf (AT)
(74) Vertreter: Beer & Partner Patentanwälte KG
(86) Internationale Anmeldenummer: PCT/EP2018/078224
(87) Internationale Veröffentlichungsnummer: WO 2019/076887

(56) Entgegenhaltungen:
- EP-A1- 3 222 872
- DE-A1- 1 427 382
- DE-U1- 202011 001 703
- GB-A- 542 043

## Beschreibung

Die Erfindung betrifft ein Verfahren mit den Merkmalen des Anspruchs 1 zum Herstellen eines Federblatts für eine Blattfeder, insbesondere Parabelfeder oder Lenkerfeder, wobei das Federblatt zwei Endbereiche, einen Mittelbereich, eine Oberseite, die im Einsatzzustand auf Zug beansprucht wird, und eine Unterseite, die im Einsatzzustand auf Druck beansprucht wird, aufweist, wobei in die Unterseite wenigstens ein Loch eingebracht wird und wobei das Federblatt warm verformt, insbesondere gewalzt, und die Oberseite des Federblatts gestrahlt wird.

Zudem betrifft die Erfindung ein Federblatt mit den Merkmalen des Anspruchs 10 für eine Blattfeder, insbesondere Parabelfeder oder Lenkerfeder, wobei das Federblatt zwei Endbereiche, einen Mittelbereich, eine Oberseite, die im Einsatzzustand auf Zug beansprucht wird, und eine Unterseite, die im Einsatzzustand auf Druck beansprucht wird, aufweist, wobei die Unterseite wenigstens ein Loch aufweist und wobei das Federblatt warm verformt, insbesondere gewalzt, und die Oberseite des Federblatts gestrahlt ist.

Blattfedern finden Anwendung bei Radaufhängungen in Kraftfahrzeugen, insbesondere in Nutzfahrzeugen oder Anhängern (gezogenes Fahrzeug). Die Anforderungen der Kraftfahrzeuge sind zum einen durch die Reduzierung des Gewichtes einzelner Bauteile geprägt. Zum anderen sind die Anforderungen dadurch geprägt, dass einzelne Bauteile immer höheren mechanischen Beanspruchungen unterliegen, beispielsweise auf Grund von steigenden Motorleistungen.

Aus dem Stand der Technik sind viele unterschiedliche Formen von Blattfedern, beispielsweise Parabelfedern oder Lenkerfedern oder Trapezfedern, bekannt. Solche Blattfedern bestehen aus einem einzelnen Federblatt oder aus mehreren Federblättern, wobei jedes Federblatt zwei Endabschnitte und einen dazwischen liegenden mittleren Abschnitt aufweist. Im mittleren Abschnitt ist ein Klemmbereich vorgesehen, in welchem die Blattfeder über eine Verbindungseinrichtung, insbesondere über einen oder mehrere die Blattfeder im Klemmbereich umfassende U-förmige Bolzen oder Formteile, mit einer Radachse oder einem Radachsenbolzen eines Fahrzeuges verbunden wird.

Weist eine Blattfeder mehrere übereinander angeordnete Federblätter auf, so sind die Federblätter oft im Klemmbereich, insbesondere über einen durch ein zentrales Durchgangsloch (im Weiteren: Mittelloch) im Klemmbereich eines jeden Federblattes geführten Bolzen, miteinander verbunden, wobei die Federblätter entweder direkt aneinander anliegen oder zwischen den Federblättern Zwischenelemente, wie z.B. Zwischenbleche, angeordnet bzw. eingeklemmt sind.

Mehrblattfedern weisen in der Regel ein Grundfederblatt, das auch als Führungsfederblatt bezeichnet werden kann, und daran angeordnete weitere Federblätter auf. In wenigstens einem Endabschnitt des Grundfederblattes können Durchgangslöcher ausgeführt sein, durch die Anbindungsmittel zum Verbinden der Blattfeder mit Fahrzeugteilen, insbesondere mit einer Achse, geführt werden können.

Federblätter von Mehrblattfedern können weitere Durchgangslöcher und/oder Sacklöcher an ihrer Unterseite aufweisen. Auch Einblattfedern können Durchgangslöcher, beispielsweise in wenigstens einem Endabschnitt vorgesehene Durchgangslöcher, durch die Anbindungsmittel zum Verbinden der Blattfeder mit Fahrzeugteilen, insbesondere mit einer Achse, geführt werden können, und/oder Sacklöcher an ihrer Unterseite aufweisen.

Mehrblattfedern sind beispielsweise aus DE 20 2011 001 703 U1 und EP 3 222 872 A1 bekannt.

Ein bekanntes Problem bei Blattfedern ist, dass Federblätter bei steigender mechanischer Beanspruchung in Bereichen, in denen sie ein Loch aufweisen, brechen können. In dieser Hinsicht ist insbesondere das Problem von Mittellochbrüchen zu berücksichtigen.

Mittellochbrüche stellen ein allgemein bekanntes und unerwünschtes Bruchverhalten bei Blattfedern dar. Meist gehen Mittellochbrüche von der im Einsatzzustand auf Druck beanspruchten Unterseite eines Federblatts aus. Mittellochbrüche können im Einsatzzustand sowohl durch statische Beanspruchung der Blattfeder, d.h. im Ruhezustand eines Fahrzeuges, oder auch durch dynamische Beanspruchung der Blattfeder, d.h. während des Fahrens, hervorgerufen werden.

Die Ursache von Mittellochbrüchen war bislang nicht eindeutig feststellbar. In der Praxis wurde in der Regel wasserstoffinduziertes Risswachstum (HAC = Hydrogen Assisted Cracking) als Ursache von Mittellochbrüchen angenommen.

Zur Vermeidung von Mittellochbrüchen ist es aus der CA 2 865 630 A1 bekannt, wasserstoffinduziertes Risswachstum zu vermeiden, indem das Federblatt lokal erhitzt und anschließend rapid abgekühlt wird. Dieses Verfahren ist deshalb nachteilig, weil es prozesstechnisch aufwendig ist und das Erhitzen und Abkühlen einen hohen und teuren Energieaufwand darstellt. Zudem kann das Erhitzen nur vor einem Kugelstrahlen der Federblattoberseite stattfinden, da nach dem Kugelstrahlen kein Erhitzen des Federblatts mehr stattfinden soll, da das Erhitzen an sich negative Auswirkungen auf die Oberflächenbeschaffenheit des Federblatts hat.

Zur Vermeidung von Mittellochbrüchen ist es weiters bekannt, die Kanten des Mittelloches auf der Federblattunterseite zu fasen und zwischen Federblättern und an der Federblattoberseite eine relativ (in Bezug auf das Material des Federblatts) weiche Stahlzwischenlage anzuordnen. Auf der Federblattunterseite wird eine relativ weiche Beilagscheibe angeordnet. Auch diese Verfahrensschritte sind prozesstechnisch aufwendig und teuer, wobei der zusätzliche Materialaufwand weitere Kosten verursacht und grundsätzlich das Gewicht der fertigen Blattfeder erhöht. Zudem treten Mittellochbrüche auch im Bereich der Fase auf.

Der Erfindung liegt die Aufgabe zu Grunde, ein Federblatt für eine Blattfeder zur Verfügung zu stellen, mit welcher das Risiko eines Lochbruches, insbesondere das Risiko eines Mittellochbruches, unter Vermeidung der Nachteile des Standes der Technik verringert wird.

Bei der Herstellung von Federblättern finden Umformungsprozesse, insbesondere Walzvorgänge, statt, um das Federblatt in die gewünschte Form zu bringen. Dabei ist es bekannt, dass die Federblätter an ihrer Oberseite, welche im Einsatzzustand auf Zug beansprucht wird, nach den Walzprozessen vergütet und zur Optimierung der Spannungsverteilung weiterbearbeitet, insbesondere kugelgestrahlt oder spannungsgestrahlt, werden. Die Unterseite, die im Einsatzzustand auf Druck beansprucht wird, wird in der Regel nicht gestrahlt, sondern verbleibt in jenem Materialzustand, welchen sie nach den Walzprozessen und dem Vergüten hat.

Es hat sich nun überraschend gezeigt, dass die Ursache für Mittellochbrüche darin liegen kann, dass durch das Spannungsstrahlen der im Einsatzzustand auf Zug beanspruchten Seite des Federblattes Zugspannungen auf der im Einsatzzustand auf Druck beanspruchten Seite des Federblattes entstehen. Die Zugspannungen liegen nach dem Spannungsstrahlen, d.h. nachdem das Federblatt wieder entlastet ist, auf der im Einsatzzustand auf Druck beanspruchten Seite des Federblattes vor. Diese Ursache war bislang nicht bekannt.

Dadurch, dass die Federblattoberseite nach den Walzprozessen zur Optimierung der Spannungsverteilung weiterbearbeitet, insbesondere spannungsgestrahlt, wird, die Unterseite jedoch nicht, können in diesem Materialzustand Zugspannungen auf der Unterseite verbleiben.

Die Erkenntnis, dass diese Zugspannungen vorliegen und für das Auftreten von Mittellochbrüchen verantwortlich sein können, ist neu.

In diesem Materialzustand kann es im Einsatzzustand der Blattfeder an den Kanten der Löcher zu Spannungsüberhöhungen kommen. Wenn beispielsweise eine Mehrblattfeder verschraubt wird, so findet dadurch eine Kraftübertragung und somit eine Spannungsüberleitung vom Bolzenkopf auf die Unterseite eines Federblatts statt. Weiters kann die Oberflächenspannung nach dem Einbau einer Blattfeder in eine Radaufhängung eines Fahrzeuges durch das Aufbringen von äußeren Spannungen durch eine konvexe oder konkave Federblattoberfläche überlagert werden. Zusätzlich können Prozessinstabilitäten während der Herstellung von Federblättern weitere negative Auswirkungen haben. Durch die genannten, negativen Auswirkungen erhöht sich das Risiko eines Mittellochbruches aufgrund des Vorliegens von Zugspannungen auf der im Einsatzzustand auf Druck beanspruchten Seite des Federblattes.

Zudem können Zugspannungen in oberflächennahen Bereichen ein wasserstoffinduziertes Risswachstum (HAC = Hydrogen Assisted Cracking) unterstützen, wodurch das Risiko eines Mittellochbruches wiederum erhöht wird.

Die Erfindung macht sich diese neue Erkenntnis zu Nutze, indem erfindungsgemäß vorgesehen ist, dass die Oberseite des Federblatts unter Vorspannung des Federblatts gestrahlt wird, wodurch Zugspannungen auf der im Einsatzzustand auf Druck beanspruchten Unterseite des Federblatts entstehen, und dass die Unterseite des Federblatts im Bereich um das Loch nach dem Strahlen der Oberseite des Federblatts lokal gestrahlt wird bzw. ist, wodurch Druckspannungen erzeugt werden, welche die Zugspannungen überlagern.

Somit können leichte Druckspannungen erzeugt werden, welche die überraschend als Ursache für Mittellochbrüche identifizierten Zugspannungen überlagern und die lokale Lebensdauer des Federblatts steigern. In Folge ist das Risiko eines Lochbruches stark verringert, wobei beim Herstellen des Federblatts der prozesstechnische Aufwand sowie die Energie- und Herstellungskosten nicht spürbar erhöht werden und keine zusätzlichen Bauteile, welche weitere Kosten verursachen und ein zusätzliches Gewicht darstellen, verbaut werden müssen.

Besonders vorteilhaft wird auch ein wasserstoffinduziertes Risswachstum vermieden, wobei im Gegensatz zum Verfahren gemäß der CA 2 865 630 A1 keine Zugspannungen auf der Unterseite des Federblattes mehr vorliegen.

Ein solches Federblatt wird aus einem Profilstab hergestellt. Der Profilstab wird abgelängt, erwärmt und Umformungsprozessen, insbesondere Walz- und Stanzprozessen, unterzogen, so dass er in die gewünschte Form eines Federblatts gebracht wird. Nach dem Umformen finden Vergütungsmaßnahmen statt. Während der Profilstab umgeformt wird, liegt an sich ein Halbfertigprodukt vor. Erst wenn sämtliche Bearbeitungsschritte, d.h. auch nach den Umformungsprozessen stattfindende Vergütungsmaßnahmen, beendet sind, liegt ein fertiges Federblatt als Endprodukt vor.

Im Rahmen der Erfindung wird jedoch schon während der Umformungsprozesse von einem Federblatt gesprochen. Somit soll klargestellt werden, dass das Einbringen des Loches / der Löcher in die Unterseite sowie das Strahlen der Unterseite im Bereich des Loches / der Löcher Verfahrensschritte zum Ausbilden von Merkmalen sind, die sich auf das Federblatt beziehen, welches nach Beendigung aller Bearbeitungsschritte als fertiges Endprodukt vorliegt.

Im Rahmen der Erfindung ist es möglich, die gesamte Unterseite der Blattfeder oder zumindest einen Großteil davon zu strahlen. Da dies jedoch gewisse Prozesskosten verursacht und negativen Einfluss auf die Kapazität der Strahlungsanlage hat, ist in einer besonders bevorzugten Ausführungsform vorgesehen, dass die Unterseite im Bereich um das Loch lokal gestrahlt wird bzw. ist. D.h. dass die Unterseite nur im Bereich um das entsprechende Loch gestrahlt wird bzw. ist, wogegen in Bereichen, in denen kein Loch vorgesehen ist, nicht gestrahlt wird bzw. ist. In einer weiteren bevorzugten Ausführungsform der Erfindung kann vorgesehen sein, dass die Unterseite im Bereich um das Loch kugelgestrahlt wird bzw. ist.

Beispielsweise können Strahlmittel mit einem Korndurchmesser von 0,4 bis 1,2 mm verwendet werden. Besonders wirtschaftlich ist es, wenn bereits verwendete Strahlmittel, beispielsweise beim Strahlen der Oberseite des Federblattes verwendete Strahlmittel, wiederverwendet werden.

Im Rahmen der Erfindung kann ein Strahlmittel über eine Strahldüse aufgebracht werden, wobei die Strahldüse und der Bereich des Loches aufeinander ausgerichtet werden. Hierzu kann vorgesehen sein, dass die Düse zum Federblatt und/oder das Federblatt zur Düse hinbewegt wird.

Beispielsweise kann ein Roboter bei einer automatischen Strahlanlage das Federblatt umdrehen und dieses mit dem entsprechenden Loch in der Unterseite für einige Sekunden zur Strahldüse halten. Bei einer händischen Strahlanlage kann das Federblatt nach dem Strahlen der Oberseite auf ein Förderband gelegt werden. Das Förderband bewegt das Federblatt dann über eine Strahldüse.

Im Rahmen der Erfindung ist es bevorzugt, wenn ein Bereich um das Loch gestrahlt wird, so dass der Abstand vom Loch zum Übergang zwischen gestrahlter und ungestrahlter Oberfläche der Unterseite im Bereich von ca. 5 cm oder 4 cm oder 3 cm oder 2 cm oder 1 cm liegt.

Es versteht sich, dass beim Strahlen keine glatte Grenze zwischen gestrahltem und ungestrahltem Bereich entsteht. Vielmehr erfolgt der Übergang von ungestrahltem und gestrahltem Bereich graduell in einem gewissen Streuungsbereich.

Als Loch kann im Rahmen der Erfindung ein Durchgangsloch oder ein Sackloch eingebracht werden. Es können mehrere Löcher vorgesehen sein, wobei eine beliebige Kombination von Durchgangs- oder Sacklöchern denkbar ist.

Wenn an der Unterseite eines Federblattes ein Sackloch vorgesehen ist, dann ist es klar, dass dieses Sackloch ausgehend von der Unterseite in das Federblatt eingebracht wird. Ein Durchgangsloch kann im Rahmen der Erfindung ausgehend von der Unterseite oder ausgehend von der Oberseite des Federblattes in das Federblatt eingebracht werden. Maßgeblich ist, dass dabei ein Loch in die Unterseite des Federblattes eingebracht wird. In einer besonders bevorzugten Ausführungsform der Erfindung kann vorgesehen sein, dass im Mittelbereich ein Klemmbereich mit einem durchgehenden Mittelloch ausgebildet wird bzw. ist und dass der Bereich um das Mittelloch gestrahlt wird bzw. ist.

Im Rahmen der Erfindung ist vorgesehen, dass das Federblatt aus Flachstabstahl, insbesondere Federstahl, besteht.

Eine besonders bevorzugte Ausführungsform der Erfindung kann wie folgt dargestellt werden:
Das Federblatt wird warm verformt, insbesondere gewalzt, und danach vergütet, indem die Oberseite des Federblatts unter Vorspannung des Federblatts gestrahlt wird. Die Unterseite des Federblatts wird im Bereich um das Loch nach dem Strahlen der Oberseite des Federblatts unter Vorspannung gestrahlt. Die Unterseite des Federblatts kann im Bereich um das Loch direkt nach dem Strahlen der Oberseite des Federblatts stattfinden oder es können zwischen dem Strahlen der Oberseite und dem Strahlen der Unterseite noch weitere Prozesse stattfinden.

Es zeigt:
- Fig. 1: einen Bereich einer Unterseite eines Federblatts im Bereich eines Loches und
- Fig. 2: ein Blockdiagramm mit einer Ausführungsform eines erfindungsgemäßen Verfahrensablaufes.

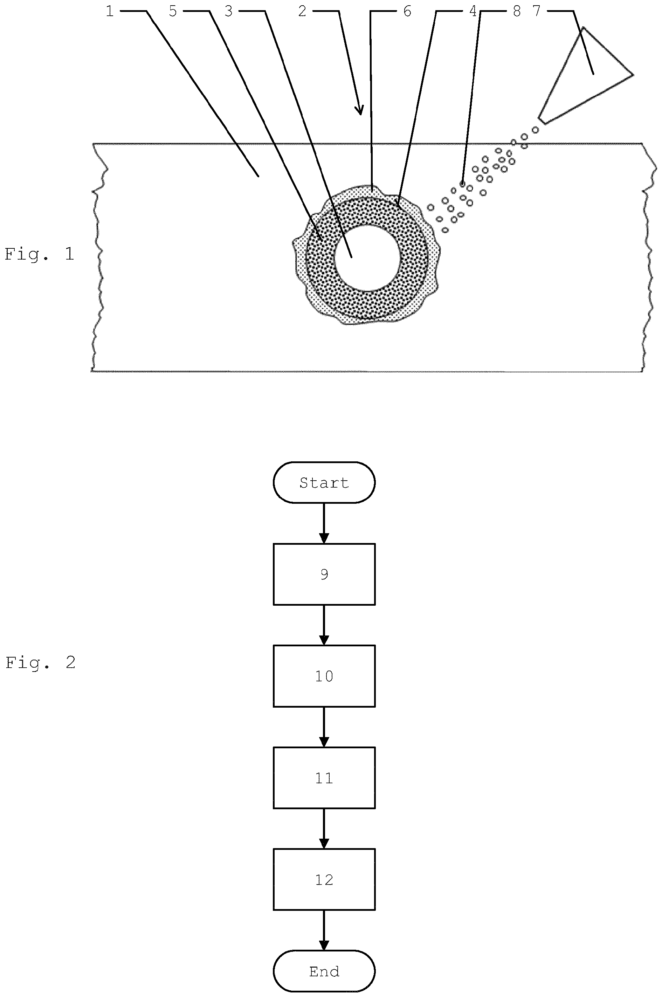

In Fig. 1 ist ein Bereich einer Unterseite 1 eines Federblattes 2 für eine Blattfeder dargestellt, in welchem ein Loch 3 eingebracht ist. Die Blattfeder kann beispielsweise eine Parabelfeder oder eine Lenkerfeder sein. Das Loch 3 kann ein Durchgangsloch oder ein Sackloch sein. Das Loch 3 kann ein in einem Klemmbereich vorgesehenes Mittelloch sein oder in einem anderen Bereich des Federblattes 2, beispielsweise in einem Endbereich, vorgesehen sein. Die Unterseite 1 des Federblattes 2 wird im Einsatzzustand der Blattfeder auf Druck beansprucht.

Das Federblatt 2 ist vorzugsweise aus Flachstabstahl, insbesondere aus Federstahl, hergestellt. Die Unterseite 1 des Federblattes 2 ist im Bereich um das Loch 3 lokal gestrahlt, insbesondere kugelgestrahlt. Der Abstand vom Loch 3 zum Übergang 4 zwischen gestrahlter und ungestrahlter Oberfläche der Unterseite 1 liegt im Bereich von wenigen Zentimetern. Beim Strahlen entsteht um das Loch ein erster Bereich 5, der gleichmäßig gestrahlt ist, sowie ein daran angrenzender, zweiter Bereich 6, bei welchem der Übergang von ungestrahltem und gestrahltem Bereich graduell in einem gewissen Streuungsbereich erfolgt.

Das Strahlen kann über eine Strahldüse 7 erfolgen, welche ein Strahlmittel 8 auf die Unterseite 1 aufbringt, wobei die Strahldüse 7 und der Bereich des Loches 3 aufeinander ausgerichtet werden.

In Fig. 2 ist ein beispielhafter Verfahrensablauf zum Herstellen eines erfindungsgemäßen Federblattes 2 in einem Blockdiagramm gezeigt, wobei einzelne mit Bezugsziffern versehene Blöcke aus einzelnen oder mehreren Verfahrensschritten bestehen können.

Im Block 9 kann beispielsweise ein Profilstab auf eine gewünschte Länge abgelängt und erhitzt werden.

Im Block 10 können Wärmebearbeitungs- und Wärmeumformungsprozesse durchgeführt werden. Insbesondere kann der erhitzte Profilstab gewalzt und gegebenenfalls weiters zugeschnitten werden, wobei in die Unterseite 1 des herzustellenden Federblattes 2 wenigstens ein Loch 3 eingebracht wird. Im Block 10 kann insbesondere ein Mittelloch in den Klemmbereich eingebracht werden. Alternativ oder zusätzlich dazu kann wenigstens ein Längsende des Federblattes 2 bearbeitet werden, indem wenigstens ein Endabschnitt zu einem Mittel zum Verbinden des Federblattes mit einem Fahrzeuggestell bzw. mit Anbindungsteilen einer Radaufhängung umgeformt, insbesondere zu einem Federauge gerollt wird. Ebenso ist eine Durchführungsform denkbar, bei der wenigstens ein Endabschnitt in ein Sicherungsmittel, wie eine Sicherheitsumrollung, umgeformt wird.

Im Block 11 können weitere mechanische Bearbeitungen stattfinden. Es können Prozesse zum Biegen, Vergüten, Härten und Anlassen des Federblattes 2 stattfinden. Ebenso wird die Oberseite des Federblatts 2 unter Vorspannung des Federblatts 2 gestrahlt.

Die Blöcke 9 bis 11 umfassen Verfahrensschritte, die aus dem Stand der Technik bekannt sind.

Im Block 12 findet der erfindungsgemäß vorgeschlagene Verfahrensschritt statt, bei dem die Unterseite 1 im Bereich um das Loch 3 lokal gestrahlt, vorzugsweise kugelgestrahlt, wird.

Nach dem Block 12 können weitere Prozesse bis zur Fertigstellung einer Blattfeder stattfinden, wobei die Blattfeder ein Federblatt 2 oder zwei oder mehr Federblätter 2 aufweisen kann.

Sofern ein Federauge gerollt wurde, kann beispielsweise ein Augenlager eingepresst werden. Beispielsweise kann das Federblatt 2 lackiert werden. Die Blattfeder kann gesetzt, geprüft und verpackt werden.

Das zu Block 12 beschriebene Strahlen der Unterseite des Federblatts 2 kann unmittelbar nach dem Spannungsstrahlen der Oberseite des Federblatts 2 stattfinden oder es können zwischen dem Strahlen der Oberseite und dem Strahlen der Unterseite noch weitere Prozesse stattfinden, beispielsweise das Setzen.

## Patentansprüche

1. Verfahren zum Herstellen eines Federblatts (2) für eine Blattfeder, insbesondere Parabelfeder oder Lenkerfeder, wobei das Federblatt (2) zwei Endbereiche, einen Mittelbereich, eine Oberseite, die im Einsatzzustand auf Zug beansprucht wird, und eine Unterseite (1), die im Einsatzzustand auf Druck beansprucht wird, aufweist, wobei das Federblatt (2) warm verformt, insbesondere gewalzt, wird, in die Unterseite (1) des Federblattes (2) wenigstens ein Loch (3) eingebracht wird und die Oberseite des Federblatts (2) gestrahlt wird, **dadurch gekennzeichnet, dass** die Oberseite des Federblatts (2) unter Vorspannung des Federblatts (2) gestrahlt wird, wodurch Zugspannungen auf der im Einsatzzustand auf Druck beanspruchten Unterseite des Federblatts entstehen, und dass die Unterseite (1) des Federblatts (2) im Bereich um das Loch (3) nach dem Strahlen der Oberseite des Federblatts (2) lokal gestrahlt wird, wodurch Druckspannungen erzeugt werden, welche die Zugspannungen überlagern.

2. Verfahren nach Anspruch 1, **dadurch gekennzeichnet, dass** die Unterseite (1) nur im Bereich um das entsprechende Loch (3) gestrahlt wird, wogegen in Bereichen, in denen kein Loch (3) vorgesehen ist, nicht gestrahlt wird.

3. Verfahren nach Anspruch 1, **dadurch gekennzeichnet, dass** die Unterseite (1) im Bereich um das Loch (3) kugelgestrahlt wird.

4. Verfahren nach einem der Ansprüche 1 bis 3, **dadurch gekennzeichnet, dass** ein Strahlmittel (8) über eine Strahldüse (7) aufgebracht wird, wobei die Strahldüse (7) und der Bereich des Loches (3) aufeinander ausgerichtet werden.

5. Verfahren nach Anspruch 4, **dadurch gekennzeichnet, dass** die Strahldüse (7) zum Federblatt (2) und/oder das Federblatt (2) zur Strahldüse (7) hinbewegt wird.

6. Verfahren nach einem der Ansprüche 1 bis 5, **dadurch gekennzeichnet, dass** ein Bereich um das Loch (3) gestrahlt wird, so dass der Abstand vom Loch (3) zum Übergang (4) zwischen gestrahlter und ungestrahlter Oberfläche der Unterseite (1) im Bereich von ca. 5 cm oder 4 cm oder 3 cm oder 2 cm oder 1 cm liegt.

7. Verfahren nach einem der Ansprüche 1 bis 6, **dadurch gekennzeichnet, dass** als Loch (3) ein Durchgangsloch oder ein Sackloch eingebracht wird, wobei insbesondere im Mittelbereich ein Klemmbereich mit einem durchgehenden Mittelloch ausgebildet und der Bereich um das Mittelloch gestrahlt wird.

8. Verfahren nach einem der Ansprüche 1 bis 7, **dadurch gekennzeichnet, dass** das Federblatt (2) aus Flachstabstahl, insbesondere Federstahl, hergestellt wird.

9. Verfahren nach einem der Ansprüche 1 bis 8, **dadurch gekennzeichnet, dass** das Federblatt (2) nach dem Walzen aber vor dem Strahlen der Unterseite (1) vergütet wird.

10. Federblatt für eine Blattfeder, insbesondere Parabelfeder oder Lenkerfeder, wobei das Federblatt (2) zwei Endbereiche, einen Mittelbereich, eine Oberseite, die im Einsatzzustand auf Zug beansprucht wird, und eine Unterseite (1), die im Einsatzzustand auf Druck beansprucht wird, aufweist, wobei die Unterseite (1) wenigstens ein Loch (3) aufweist und wobei das Federblatt (2) warm verformt, insbesondere gewalzt, und die Oberseite des Federblatts (2) gestrahlt ist, **dadurch gekennzeichnet, dass** die Oberseite des Federblatts (2) unter Vorspannung des Federblatts (2) gestrahlt ist, wodurch Zugspannungen auf der im Einsatzzustand auf Druck beanspruchten Unterseite des Federblatts entstehen, und dass die Unterseite (1) im Bereich um das Loch (3) lokal gestrahlt ist, wodurch Druckspannungen erzeugt werden, welche die Zugspannungen überlagern.

11. Federblatt nach Anspruch 10, **dadurch gekennzeichnet, dass** die Unterseite (1) nur im Bereich um das entsprechende Loch (3) gestrahlt ist, wogegen sie in Bereichen, in denen kein Loch (3) vorgesehen ist, nicht gestrahlt ist.

12. Federblatt nach Anspruch 10 oder 11, **dadurch gekennzeichnet, dass** die Unterseite (1) im Bereich um das Loch (3) kugelgestrahlt ist.

13. Federblatt nach einem der Ansprüche 10 bis 12, **dadurch gekennzeichnet, dass** der Abstand vom Loch (3) zum Übergang (4) zwischen gestrahlter und ungestrahlter Oberfläche der Unterseite (1) im Bereich von ca. 5 cm oder 4 cm oder 3 cm oder 2 cm oder 1 cm liegt.

14. Federblatt nach einem der Ansprüche 10 bis 13, **dadurch gekennzeichnet, dass** das Loch (3) ein Durchgangsloch oder ein Sackloch ist, wobei insbesondere im Mittelbereich ein Klemmbereich mit einem durchgehenden Mittelloch vorgesehen ist und der Bereich um das Mittelloch gestrahlt ist.

15. Federblatt nach einem der Ansprüche 10 bis 14, **dadurch gekennzeichnet, dass** es aus Flachstabstahl, insbesondere Federstahl, hergestellt ist.

## Claims

1. A method for manufacturing a spring leaf (2) for a leaf spring, in particular a parabolic spring or a trailing arm spring, wherein the spring leaf (2) has two end regions, a center region, an top side, which is subjected to tension in the operating state, and a bottom side (1), which is subjected to compression in the operating state, the spring leaf (2) being hot-formed, in particular rolled, at least one hole (3) being made in the bottom side (1) of the spring leaf (2) and the top side of the spring leaf (2) being blasted, **characterized in that** the top side of the spring leaf (2) is blasted with prestressing of the spring leaf (2), causing tensile stresses to arise on the bottom side of the spring leaf, which is subjected to compression in the operating state, and **in that** the bottom side (1) of the spring leaf (2) is locally blasted in the region around the hole (3) after the blasting of the top side of the spring leaf (2), causing compressive stresses to be generated which are superimposed on the tensile stresses.

2. A method according to claim 1, **characterized in that** the bottom side (1) is only blasted in the region around the corresponding hole (3), whereas no blasting is carried out in regions in which no hole (3) is provided.

3. A method according to claim 1, **characterized in that** the bottom side (1) is shot-blasted in the region around the hole (3).

4. A method according to one of the claims 1 to 3, **characterized in that** a blasting agent (8) is applied via a blasting nozzle (7), the blasting nozzle (7) and the region of the hole (3) being aligned with one another.

5. A method according to claim 4, **characterized in that** the blasting nozzle (7) is moved towards the spring leaf (2) and/or the spring leaf (2) is moved towards the blasting nozzle (7).

6. A method according to one of the claims 1 to 5, **characterized in that** a region around the hole (3) is blasted so that the distance from the hole (3) to the transition (4) between the blasted and unblasted surface of the bottom side (1) is in the range of approximately 5 cm or 4 cm or 3 cm or 2 cm or 1 cm.

7. A method according to one of the claims 1 to 6, **characterized in that** a through hole or a blind hole is introduced as the hole (3), a clamping region having a continuous center hole being formed in particular in the center region, and the region around the center hole being blasted.

8. A method according to one of the claims 1 to 7, **characterized in that** the spring leaf (2) is produced from flat steel bar, in particular spring steel.

9. A method according to one of the claims 1 to 8, **characterized in that** the spring leaf (2) is annealed after rolling but before blasting of the bottom side (1).

10. A spring leaf for a leaf spring, in particular a parabolic spring or a trailing arm spring, wherein the spring leaf (2) has two end regions, a center region, an top side, which is subjected to tension in the operating state, and an bottom side (1), which is subjected to compression in the operating state, the bottom side (1) having at least one hole (3) and the spring leaf (2) being hot-formed, in particular rolled, and the top side of the spring leaf (2) being blasted, **characterized in that** the top side of the spring leaf (2) is blasted while prestressing the spring leaf (2), causing tensile stresses to arise on the bottom side of the spring leaf, which is subjected to compression in the operating state, and that the bottom side (1) is locally blasted in the region around the hole (3), causing compressive stresses to be generated which are superimposed on the tensile stresses.

11. A spring leaf according to claim 10, **characterized in that** the bottom side (1) is blasted only in the region around the corresponding hole (3), whereas it is not blasted in regions in which no hole (3) is provided.

12. A spring leaf according to claim 10 or 11, **characterized in that** the bottom side (1) is shot-blasted in the region around the hole (3).

13. A spring leaf according to one of the claims 10 to 12, **characterized in that** the distance from the hole (3) to the transition (4) between the blasted and unblasted surface of the bottom side (1) is in the range of approximately 5 cm or 4 cm or 3 cm or 2 cm or 1 cm.

14. A spring leaf according to one of the claims 10 to 13, **characterized in that** the hole (3) is a through hole or a blind hole, a clamping region having a continuous center hole being provided in particular in the center region and the region around the center hole being blasted.

15. A Spring leaf according to one of the claims 10 to 14, **characterized in that** it is produced from flat steel bar, in particular spring steel.

## Revendications

1. Procédé pour la fabrication d'une lame de ressort (2) pour un ressort à lames, en particulier un ressort parabolique ou un ressort de guidage, dans lequel la lame de ressort (2) comporte deux régions d'extrémité, une région médiane, une face supérieure soumise à une contrainte de traction dans l'état de service et une face inférieure (1) soumise à une contrainte de compression dans l'état de service, dans lequel la lame de ressort (2) est déformée à chaud, en particulier laminée, au moins un trou (3) est formé dans la face inférieure (1) de la lame de ressort (2) et la face supérieure de la lame de ressort (2) est grenaillée, **caractérisé en ce que** la face supérieure de la lame de ressort (2) est grenaillée alors que la lame de ressort (2) est précontrainte, ce qui crée des contraintes de traction sur la face inférieure de la lame de ressort soumise à une contrainte de compression dans l'état de service, et **en ce que** la face inférieure (1) de la lame de ressort (2) est grenaillée localement dans la zone entourant le trou (3) après le grenaillage de la face supérieure de la lame de ressort (2), ce qui crée des contraintes de compression qui se superposent aux contraintes de traction.

2. Procédé selon la revendication 1, **caractérisé en ce que** la face inférieure (1) n'est grenaillée que dans la zone entourant le trou (3) correspondant, alors qu'elle n'est pas grenaillée dans les zones dans lesquelles aucun trou (3) n'est prévu.

3. Procédé selon la revendication 1, **caractérisé en ce que** la face inférieure (1) est grenaillée autour du trou (3) avec des billes.

4. Procédé selon l'une des revendications 1 à 3, **caractérisé en ce qu'**un agent de grenaillage (8) est appliqué via une buse de grenaillage (7), la buse de grenaillage (7) et la zone du trou (3) étant orientées l'une vers l'autre.

5. Procédé selon la revendication 4, **caractérisé en ce que** la buse de grenaillage (7) est déplacée vers la lame de ressort (2) et/ou la lame de ressort (2) vers la buse de grenaillage (7).

6. Procédé selon l'une des revendications 1 à 5, **caractérisé en ce qu'**une zone entourant le trou (3) est grenaillée de telle façon que la distance entre le trou (3) et la transition (4) entre la surface grenaillée et non grenaillée de la face inférieure (1) soit de l'ordre d'environ 5 cm ou 4 cm ou 3 cm ou 2 cm ou 1 cm.

7. Procédé selon l'une des revendications 1 à 6, **caractérisé en ce que** le trou (3) formé est un trou traversant ou un trou borgne, une zone de serrage avec un trou médian traversant étant en particulier formée dans la région médiane et la zone entourant le trou médian étant grenaillée.

8. Procédé selon l'une des revendications 1 à 7, **caractérisé en ce que** la lame de ressort (2) est fabriquée en acier laminé plat, en particulier en acier à ressorts.

9. Procédé selon l'une des revendications 1 à 8, **caractérisé en ce que** la lame de ressort (2) est trempée et revenue après le laminage mais avant le grenaillage de la face inférieure (1).

10. Lame de ressort pour un ressort à lames, en particulier un ressort parabolique ou un ressort de guidage, laquelle lame de ressort (2) comporte deux régions d'extrémité, une région médiane, une face supérieure soumise à une contrainte de traction dans l'état de service et une face inférieure (1) soumise à une contrainte de compression dans l'état de service, dans laquelle la face inférieure (1) comporte au moins un trou (3) et la lame de ressort (2) est déformée à chaud, en particulier laminée, et la face supérieure de la lame de ressort (2) est grenaillée, **caractérisée en ce que** la face supérieure de la lame de ressort (2) est grenaillée alors que la lame de ressort (2) est précontrainte, ce qui crée des contraintes de traction sur la face inférieure de la lame de ressort soumise à une contrainte de compression dans l'état de service, et **en ce que** la face inférieure (1) est grenaillée localement dans la zone entourant le trou (3), ce qui crée des contraintes de compression qui se superposent aux contraintes de traction.

11. Lame de ressort selon la revendication 10, **caractérisée en ce que** la face inférieure (1) n'est grenaillée que dans la zone entourant le trou (3) correspondant, alors qu'elle n'est pas grenaillée dans les zones dans lesquelles aucun trou (3) n'est prévu.

12. Lame de ressort selon la revendication 10 ou 11, **caractérisée en ce que** la face inférieure (1) est grenaillée autour du trou (3) avec des billes.

13. Lame de ressort selon l'une des revendications 10 à 12, **caractérisée en ce que** la distance entre le trou (3) et la transition (4) entre la surface grenaillée et non grenaillée de la face inférieure (1) est de l'ordre d'environ 5 cm ou 4 cm ou 3 cm ou 2 cm ou 1 cm.

14. Lame de ressort selon l'une des revendications 10 à 13, **caractérisée en ce que** le trou (3) est un trou traversant ou un trou borgne, une zone de serrage avec un trou médian traversant étant en particulier prévue dans la région médiane et la zone entourant le trou médian étant grenaillée.

15. Lame de ressort selon l'une des revendications 10 à 14, **caractérisée en ce qu'**elle fabriquée en acier laminé plat, en particulier en acier à ressorts.
